# EUROPÄISCHE PATENTANMELDUNG

(11) **EP 3 835 117 A1**
(43) Veröffentlichungstag der Anmeldung: **16.06.2021**
(21) Anmeldenummer: 20000449.7
(22) Anmeldetag: 09.12.2020
(51) Int. Cl.: B60N 2/02, B60N 2/10, B60N 2/39, B60N 2/50, B60N 2/52

(54) **FAHRZEUGSITZ MIT SCHERENGESTELLANORDNUNG**

(30) Priorität: 13.12.2019 DE 102019134238
(71) Anmelder: GRAMMER AG, 92289 Ursensollen (DE)
(72) Erfinder: Dotzler, Florian, 92242 Hirschau (DE); Krivenkov, Konstantin, 92224 Amberg (DE)
(74) Vertreter: Hannke Bittner & Partner

(57) **Zusammenfassung**

Fahrzeugsitz (1) umfassend ein Fahrzeugsitzoberteil (2) und ein Fahrzeugsitzunterteil (3), welche entlang einer Höhenachse Z voneinander beabstandet sind und mittels einer Scherengestellanordnung (4) miteinander verbunden sind, wobei zumindest zwei Dämpfungselemente (11, 12, 13, 14) zwischen dem Fahrzeugsitzoberteil (2) und dem Fahrzeugsitzunterteil (3) vorgesehen sind, wobei die zumindest zwei Dämpfungselemente (11, 12, 13, 14) sich jeweils bezüglich einer zur Höhenachse Z parallelen ersten Achse in einem Anstellwinkel α geneigt erstrecken.

## Beschreibung

Die Erfindung betrifft einen Fahrzeugsitz umfassend ein Fahrzeugsitzoberteil und ein Fahrzeugsitzunterteil, welche entlang einer Höhenachse Z beabstandet sind und mittels einer Scherengestellanordnung miteinander verbunden sind, wobei die Scherengestellanordnung zumindest eine Innenschwinge und zumindest eine Außenschwinge umfasst.

Derartige Fahrzeugsitze sind insbesondere in Nutzfahrzeugen wie beispielsweise Traktoren, Baumaschinen, Stapler, Lastkraftwagen usw. vorgesehen. Insbesondere Fahrersitze, in welchen der Fahrzeugführer unter Umständen lange Zeiten verbringt, müssen in der Regel besonderen Bedingungen genügen. Der Fahrzeugführer ist körperlichen Belastungen aufgrund von Schwingungseinwirkungen, bedingt durch den Zustand der Fahrstrecke, ausgesetzt. Derartige Schwingungseinwirkungen sollen unter anderem durch den Fahrersitz vermindert werden.

Entsprechende Schwingungsbelastungen umfassen vertikale Schwingungen des Fahrzeugsitzoberteils entlang der Höhenachse Z, rotatorische Schwingungen aufgrund einer Wankbewegung des Fahrzeugsitzoberteils um die Längsachse X und rotatorische Schwingungen aufgrund einer Nickbewegung des Fahrzeugsitzoberteils um eine Breitenachse Y.

Aufgabe der vorliegenden Erfindung ist es einen Fahrzeugsitz bereitzustellen, welcher eine Verminderung der Schwingungsbelastungen, beziehungsweise Schwingungsisolation für den Insassen ermöglicht.

Die Aufgabe wird gelöst von einem Fahrzeugsitz, umfassend ein Fahrzeugsitzoberteil und ein Fahrzeugsitzunterteil, welche entlang einer Höhenachse (Z) voneinander beabstandet sind und mittels einer Scherengestellanordnung miteinander verbunden sind, wobei die Scherengestellanordnung zumindest eine Innenschwinge und zumindest eine Außenschwinge umfasst, wobei zumindest zwei Dämpfungselemente zwischen dem Fahrzeugsitzoberteil und dem Fahrzeugsitzunterteil vorgesehen sind, wobei die zumindest zwei Dämpfungselemente sich jeweils bezüglich einer zur Höhenachse (Z) parallelen ersten Achse in einem Anstellwinkel α geneigt erstrecken.

Bei einer derartigen geneigten Anordnung der zumindest zwei Dämpfungselemente ist der Anstellwinkel α vorteilhafterweise kleiner als 90°. Durch die zumindest zwei Dämpfungselemente wird demnach zumindest eine Vertikalbewegung des Fahrzeugsitzoberteils relativ zu dem Fahrzeugsitzunterteil gedämpft. Vorteilhafterweise wird bei einem Dämpfungsvorgang die Bewegungsenergie dissipiert.

Vorzugsweise sind die zumindest eine Innenschwinge und die zumindest eine Außenschwinge um eine sich entlang einer Längsrichtung (X) erstreckende dritte Drehachse relativ zu dem Fahrzeugsitzunterteil schwenkbar angeordnet. Durch eine derartige Anordnung kann das Fahrzeugsitzoberteil relativ zu dem Fahrzeugsitzunterteil oder umgekehrt vorteilhafterweise eine Wankbewegung um die dritte Drehachse durchführen. Diese Wankbewegung kann vorteilhafterweise ebenso durch die zumindest zwei geneigt angeordneten Dämpfungselemente gedämpft werden.

Vorteilhafterweise sind die zumindest eine Innenschwinge und die zumindest eine Außenschwinge durch ein Verbindungselement verbunden, welches um jeweils eine sich entlang einer Breitenrichtung (Y) erstreckende Drehachse relativ zu der zumindest einen Innenschwinge und relativ zu der zumindest einen Außenschwinge drehbar ist. Vorzugsweise sind die zumindest zwei Dämpfungselemente zwischen dem Verbindungselement und dem Fahrzeugsitzunterteil angeordnet. Denkbar wäre auch, dass die zumindest zwei Dämpfungselemente zwischen dem Fahrzeugsitzoberteil und dem Fahrzeugsitzunterteil angeordnet sind.

Durch die schwenkbewegliche Verbindung der zumindest einen Innenschwinge und der zumindest einen Außenschwinge kann vorteilhafterweise eine Nickbewegung des Fahrzeugsitzoberteils relativ zu dem Fahrzeugsitzunterteil in eine Drehbewegung des Verbindungselements um eine erste Drehachse relativ zu der zumindest einen Innenschwinge und um eine zweite Drehachse relativ zu der zumindest einen Außenschwinge übersetzt, beziehungsweise umgewandelt werden. Durch die zumindest zwei geneigt angeordneten Dämpfungselemente kann die Verdrehbewegung des ersten Verbindungselements und somit, bedingt durch die vorhandene mechanische Kopplung auch die entsprechende Nickbewegung des Fahrzeugsitzoberteils, relativ zu dem Fahrzeugsitzunterteil gedämpft werden. Unter einer Nickbewegung ist eine Verkippung des Fahrzeugsitzoberteils relativ zu dem Fahrzeugsitzunterteil um eine Nickachse, welche sich entlang der Breitenachse Y erstreckt zu verstehen. Ebenso kann bei einer Nickbewegung das Fahrzeugsitzoberteil horizontal ausgerichtet bleiben und das Fahrzeugsitzunterteil relativ zu dem Fahrzeugsitzoberteil um die Breitenachse Y verkippen. Zur Dämpfung einer Nickbewegung wäre es zwar denkbar, die zumindest zwei Dämpfungselemente parallel zur Höhenachse (Z) zu stellen, jedoch würde sich dies nachteilig auf den Federungshub entlang der Höhenachse (Z) auswirken. Durch die geneigt angeordneten Dämpfungselement wird dieser Nachteil beseitigt.

Bei einer Wankbewegung verschwenkt das Fahrzeugsitzoberteil relativ zu dem Fahrzeugsitzunterteil oder umgekehrt um die dritte Drehachse. Durch eine solche Verschwenkung wird ein seitlicher Abstand zwischen Fahrzeugsitzoberteil und dem Fahrzeugsitzunterteil, beziehungsweise zwischen dem Verbindungselement und dem Fahrzeugsitzunterteil modifiziert. Durch die geneigte Anordnung der Dämpfungselemente zwischen dem Fahrzeugsitzunterteil und dem Verbindungselement kann auch eine solche Wankbewegung gedämpft werden. Zur Dämpfung einer Wankbewegung wäre es zwar denkbar, die zumindest zwei Dämpfungselemente parallel zur Höhenachse (Z) zu stellen, jedoch würde sich dies nachteilig auf den Federungshub entlang der Höhenachse (Z) auswirken. Durch die geneigt angeordenten Dämpfungselement wird dieser Nachteil beseitigt.

Schließlich können durch die Dämpfungselemente vertikale Schwingungen gedämpft werden bei welchen das Fahrzeugsitzoberteil relativ zu dem Fahrzeugsitzunterteil verlagert wird.

Der Fahrzeugsitz kann vorzugsweise auch um 90° geschwenkt um die Z- Achse eingebaut werden. Die Nickbewegung, beziehungsweise die Nickachse würde somit zur Wankbewegung, beziehungsweise Wankachse und umgekehrt.

Nach einer besonders bevorzugten Ausführungsform sind vier Dämpfungselemente vorgesehen. Vorteilhafterweise sind zwischen dem Fahrzeugsitzunterteil und dem Verbindungselement vier Dämpfungselemente angeordnet. Vorzugsweise bilden in einer Ruheposition des Sitzes jeweils zwei Dämpfungselemente die Schenkel eines fiktiven Trapezes aus. Bevorzugt werden die Grundseiten des fiktiven Trapezes durch das Fahrzeugsitzunterteil und durch das Verbindungselement gebildet. Unter einer Ruheposition des Fahrzeugsitzes ist diejenige Position zu verstehen in welcher kein Schwingungseintrag erfolgt, beispielsweise ein nicht belegter Fahrzeugsitz in einem ruhenden Fahrzeug. Vorteilhafterweise ist das Fahrzeugsitzunterteil im wesentlichen rechteckförmig ausgebildet. Bevorzugt bilden die vier Dämpfungselemente entlang jeder Seite des Fahrzeugsitzunterteils ein fiktives Trapez aus. Vorteilhafterweise kann die Anordnung der vier Dämpfungselemente in der Ruheposition auch als ein fiktiver Pyramidenstumpf angesehen werden. Eine entsprechende fiktive rechteckige untere Grundfläche wäre dann durch die vier unteren Anordungspunkte der Dämpfungselemente gegeben. Eine vorteilhafte obere fiktive Grundflache wäre durch obere Anordnungspunkte der Dämpfungselemente an dem Verbindungselement gegeben.

Nach einer weiteren vorteilhaften Ausführungsform sind die Dämpfungselemente um eine jeweilige Schwenkachse schwenkbar an dem Fahrzeugsitzunterteil angeordnet. Bevorzugt sind die Dämpfungselemente um eine jeweilige weitere Schwenkachse schwenkbar an dem Verbindungselement angeordnet. Die genannten vorteilhaften unteren Anordnungspunkte an dem Fahrzeugsitzunterteil können demnach vorzugsweise als Drehlagerungselemente ausgebildet sein, an welchen das jeweilige Dämpfungselement verschwenkbar angeordnet ist. Ferner können vorzugsweise die genannten oberen Anordnungspunkte an dem Verbindungselement als Drehlagerungselemente ausgebildet sein, an welchen das jeweilige Dämpfungselement verschwenkbar angeordnet ist. Vorteilhafterweise ist das jeweilige Dämpfungselement mittels einer sphärischen Lagerung mit dem Fahrzeugsitzunterteil und/oder dem Verbindungselement verbunden. Vorteilhafterweise weist das jeweilige Dämpferelement jeweils ein oberes und ein unteres Dämpferauge auf, welches vorzugsweise als eine Bohrung oder Ausnehmung ausgestaltet ist. In diesen Dämpferaugen kann vorteilhafterweise jeweils ein entsprechender Schwenkbolzen angeordnet werden, mittels welchem das jeweilige Dämpfungselement mit dem Verbindungselement, beziehungsweise dem Fahrzeugsitzunterteil verbunden ist. Weiterhin ist es von Vorteil, dass in einem oder mehreren der genannten Dämpferaugen ein Hülse oder Buchse aus einem elastischen Material vorgesehen ist, in welcher der jeweilige Schwenkbolzen angeordnet ist. Ein solche vorteilhafte (sphärische) Lagerung ermöglicht eine Rotationsfreiheit, durch eine elastische Verformung der Hülse oder Buchse, welche beispielsweise von Vorteil ist, wenn bei einer Rotation um die Längsachse (X) die beiden Schwenkachsen am oberen und unterem Ende des Dämpfungselements nicht mehr parallel sind.

Nach einer weiteren bevorzugten Ausführungsform kreuzen sich die zumindest eine Innenschwinge und die zumindest eine Außenschwinge in einem Kreuzungsbereich K. Vorzugsweise sind zumindest in einer Ruheposition die erste Drehachse und die zweite Drehachse entlang der Höhenachse Z über dem Kreuzungsbereich K oder entlang der Höhenachse Z unter dem Kreuzungsbereich K angeordnet. Vorteilhafterweise ist zumindest in der Ruheposition das Verbindungselement im Wesentlichen mittig bezüglich eines Abstandes zwischen dem Fahrzeugsitzoberteil und dem Fahrzeugsitzunterteil angeordnet. Dementsprechend ist es bevorzugt, dass die zumindest eine Innenschwinge und die zumindest eine Außenschwinge derart ausgebildet sind, dass zumindest in der Ruheposition der Kreuzungsbereich außermittig bezüglich des Abstandes zwischen dem Fahrzeugsitzoberteil und dem Fahrzeugsitzunterteil angeordnet ist. Bevorzugt weisen zumindest in einer Ruheposition die erste Drehachse und die zweite Drehachse den gleichen Abstand entlang der Höhenachse Z zu dem Fahrzeugsitzunterteil auf. Demnach wäre das Verbindungselement in der Ruheposition nicht verschwenkt wodurch die beiden Drehachsen auf der gleichen Höhe angeordnet sind.

Nach einer weiteren bevorzugten Ausführungsform sind die zumindest eine Innenschwinge und die zumindest eine Außenschwinge jeweils mittels zumindest einer unteren Loslagerung an dem Fahrzeugsitzunterteil angeordnet. Vorzugsweise sind die zumindest eine Innenschwinge und die zumindest eine Außenschwinge jeweils mittels zumindest einer oberen Loslagerung an dem Fahrzeugsitzoberteil angeordnet. Vorteilhafterweise ist die zumindest eine Innenschwinge oder die zumindest eine Außenschwinge mittels einer Festlagerung mit dem Fahrzeugsitzunterteil verbunden. Dabei ist es weiterhin von Vorteil, dass die zumindest eine Innenschwinge oder die zumindest eine Außenschwinge mittels einer weiteren Festlagerung mit dem Fahrzeugsitzoberteil verbunden ist.

Nach einer weiteren bevorzugten Ausführungsform ist bei einer Vertikalbewegung des Fahrzeugsitzoberteils relativ zu dem Fahrzeugsitzunterteil das Verbindungselement entlang der Höhenachse Z verlagert. Vorzugsweise ist der Anstellwinkel α der Dämpfungselemente abhängig von einer vertikalen Position des Fahrzeugsitzoberteils relativ zu dem Fahrzeugsitzunterteil. Durch die vorteilhafte schwenkbare Anordnung der Dämpfungselemente an dem Verbindungselement, beziehungsweise dem Fahrzeugsitzunterteil wird bei einer Verlagerung des Fahrzeugsitzoberteils, beziehungsweise des Verbindungselements in vertikaler Richtung also entlang der Höhenachse Z der Anstellwinkel α verändert. Der Anstellwinkel α erstreckt sich vorteilhafterweise zwischen einer Mittelachse des jeweiligen Dämpfungselements und der ersten Achse. Dabei ist es von Vorteil, dass der Anstellwinkel α für jedes Dämpfungselement unterschiedlich sein kann. Vorteilhafterweise ist der Anstellwinkel α aus einem Bereich zwischen 10° und 80° gewählt. Bevorzugt ist der Anstellwinkel α aus einem Bereich zwischen 15° und 75° gewählt. Weiter bevorzugt ist der Anstellwinkel α aus einem Bereich zwischen 20° und 70° gewählt.

Nach einer weiteren bevorzugten Ausführungsform ist bei einer Nickbewegung das Fahrzeugsitzoberteil um eine Nickachse relativ zu dem Fahrzeugsitzunterteil verkippt. Dabei kann vorteilhafterweise ein hinterer Abschnitt des Fahrzeugsitzoberteils relativ zu einem vorderen Abschnitt des Fahrzeugsitzoberteils entlang der Höhenachse Z nach oben oder nach unten verkippt werden. Vorteilhafterweise wird bei dieser Nickbewegung das Verbindungselement um die erste Drehachse und um die zweite Drehachse gedreht. Bevorzugt erfolgt eine Verlagerung der in den Loslagern gelagerten Schwingenenden auf entlang der Höhenachse Z unterschiedliche horizontale Ebenen.

Nach einer weiteren bevorzugten Ausführungsform sind bei einer Wankbewegung die zumindest eine Innenschwinge, die zumindest eine Außenschwinge und das Fahrzeugsitzoberteil um die dritte Drehachse relativ zu dem Fahrzeugsitzunterteil verschwenkt.

Vorteilhafterweise dämpfen die Dämpfungselemente die Vertikalbewegung des Fahrzeugsitzoberteils relativ zu dem Fahrzeugsitzunterteil, die Nickbewegung des Fahrzeugsitzoberteils um die Nickachse relativ zu dem Fahrzeugsitzunterteil und die Wankbewegung des Fahrzeugsitzoberteils um die dritte Drehachse relativ zu dem Fahrzeugsitzunterteils. Vorteilhafterweise teilen sich die Dämpferkräfte abhängig vom Anstellwinkel α in die jeweiligen Komponenten (Wanken, Nicken oder Vertikal) auf.

Nach einer weiteren bevorzugten Ausführungsform umfassen die unteren Loslager der zumindest einen Innenschwinge und der zumindest einen Außenschwinge zumindest ein Aufnahmeelement. Vorteilhafterweise ist das zumindest eine Aufnahmeelement um die dritte Drehachse relativ zu dem Fahrzeugsitzunterteil schwenkbar. Vorzugsweise umfassen die unteren Loslagerungen Lagerrollen. Bevorzugt ist das zumindest eine Aufnahmeelement als ein Führungselement ausgebildet, in welchem die Lagerrollen entlang der Längsrichtung X geführt sind.

Nach einer weiteren bevorzugten Ausführungform umfasst die Scherengestellanordnung zwei Innenschwingen, welche ein Innenschwingenpaar bilden. Vorzugsweise umfasst die Scherengestellanordnung weiterhin zwei Außenschwingen, welche ein Außenschwingenpaar bilden. Die beiden Innenschwingen weisen vorteilhafterweise Schwingenenden auf, welche mittels eines Schwingenbolzens verbunden sind. Bevorzugt sind an dem Schingenbolzen die Lagerrollen angeordnet. Die beiden Außenschwingen weisen vorteilhafterweise Schwingendenden auf, welche mittels eines Schwingenbolzens verbunden sind. Bevorzugt sind an dem Schwingenbolzen die Lagerrollen angeordnet.

Nach einer weiteren bevorzugten Ausführungsform ist an der zumindest einen Innenschwinge oder der zumindest einen Außenschwinge ein Hebelarm vorgesehen. Vorteilhafterweise ist der Hebelarm mit der zumindest einen Außenschwinge oder der zumindest einen Innenschwinge über ein zweites Verbindungselement verbindbar. Bevorzugt ist das zweite Verbindungselement in seiner Länge modifizierbar. Bevorzugt ist die Verkippung des Fahrzeugsitzoberteils um die Nickachse relativ zu dem Fahrzeugsitzunterteil durch die Länge des zweiten Verbindungselements festlegbar. Zu der vorteilhaften Modifikation der Länge des zweiten Verbindungselements kann beispielsweise ein Aktor vorgesehen sein.

Nach einer weiteren bevorzugten Ausführungsform ist zusätzlich zu den Dämpferelementen zumindest ein Federelement vorgesehen, mittels welchem eine Verlagerung des Fahrzugsitzoberteils relativ zu dem Fahrzugsitzunterteil aufgrund der Schwingungseinwirkung durch eine vertikale Bewegung eine Nickbewegung oder eine Wankbewegung rückstellbar ist.

Weitere Vorteile, Ziele und Eigenschaften der vorliegenden Erfindung werden anhand nachfolgender Beschreibung der anliegenden Figuren erläutert. Gleichartige Komponenten können in den verschiedenen Ausführungsformen gleiche Bezugszeichen aufweisen.

In den Figuren zeigen:
- Fig.1: Prinzipskizze des Fahrzeugsitzes nach einer Ausführungsform;
- Fig.2a, 2b: Prinzipskizzen des Fahrzeugsitzes nach einer Ausführungsform;
- Fig.3: eine Ansicht des Innenschwingenpaars und des Außenschwingenpaars;
- Fig.4a, 4b: Ansichten des Verbindungselements;
- Fig.5: eine Ansicht des Innenschwingenpaars und des Außenschwingenpaars nach einer weiteren Ausführungsform;
- Fig.6: Vorderansicht des Fahrzeugsitzes nach einer Ausführungsform in einer mittleren Position entlang der Höhenachse Z;
- Fig.7: Vorderansicht des Fahrzeugsitzes nach einer Ausführungsform in einer oberen und einer unteren Position entlang der Höhenachse Z
- Fig.8: Seitenansicht des Fahrzeugsitzes nach einer Ausführungsform in einer mittleren Position entlang der Höhenachse Z;
- Fig.9: Seitenansicht des Fahrzeugsitzes nach einer Ausführungsform in einer oberen und einer unteren Position entlang der Höhenachse Z;
- Fig.10: Vorderansicht des Fahrzeugsitzes nach einer Ausführungsform nach einer Nickbewegung;
- Fig.11: Vorderansicht des Fahrzeugsitzes nach einer Ausführungsform nach einer Wankbewegung;
- Fig.12: Seitenansicht des Fahrzeugsitzes nach einer Ausführungsform nach einer Nickbewegung;
- Fig.13: Seitenansicht des Fahrzeugsitzes nach einer Ausführungsform nach einer Nickbewegung;
- Fig.14: Draufsicht auf den Fahrzeugsitz nach einer Ausführungsform;
- Fig.15: Isometrische Ansicht des Fahrzeugsitzes nach einer Ausführungsform;
- Fig. 16: Isometrische Ansicht des Fahrzeugsitzes nach einer Ausführungsform nach einer Nickbewegung;
- Fig. 17: Isometrische Ansicht des Fahrzeugsitzes nach einer Ausführungsform in einer unteren vertikalen Position.

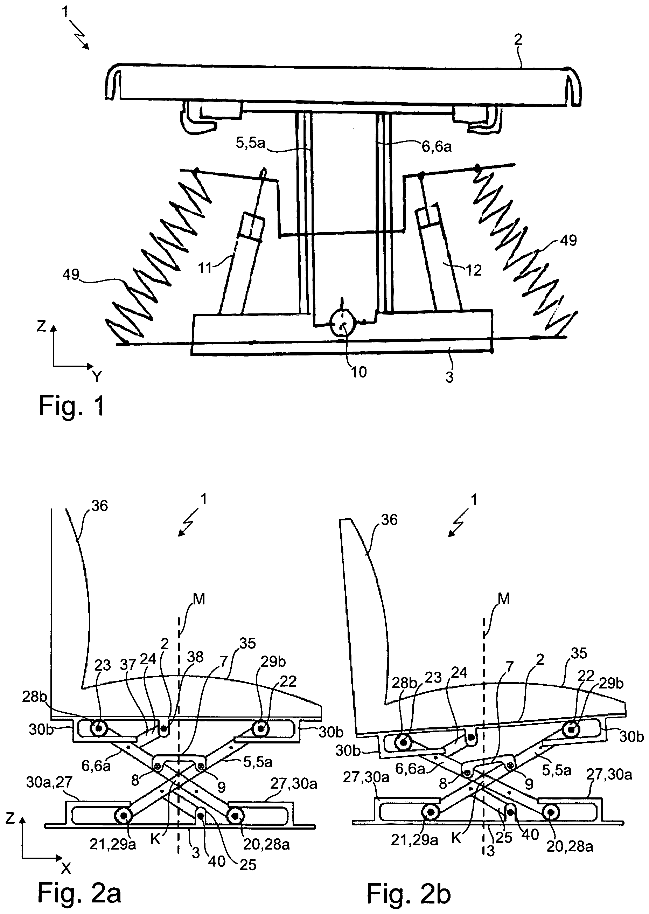

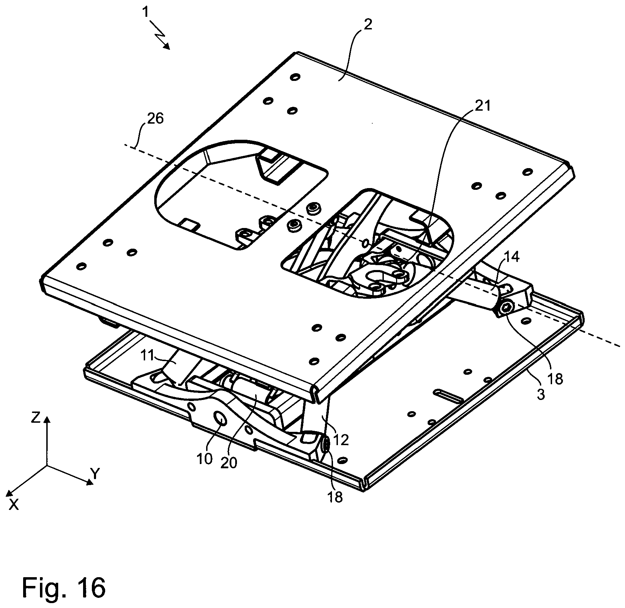

In den Figuren 1 bis 17 wird ein Fahrzeugsitz 1 dargestellt, umfassend ein Fahrzeugsitzoberteil 2 und ein Fahrzeugsitzunterteil 3, welche entlang einer Höhenachse Z voneinander beabstandet sind und mittels einer Scherengestellanordnung 4 miteinander verbunden sind, wobei die Scherengestellanordnung 4 zumindest eine Innenschwinge 5, 5a und zumindest eine Außenschwinge 6, 6a umfasst, wobei zumindest zwei Dämpfungselemente 11, 12, 13, 14 zwischen dem Fahrzeugsitzoberteil 2 und dem Fahrzeugsitzunterteil 3 vorgesehen sind, wobei die zumindest zwei Dämpfungselemente 11, 12, 13, 14 sich jeweils bezüglich einer zur Höhenachse Z parallelen ersten Achse 15 in einem Anstellwinkel α geneigt erstrecken.

Die zumindest eine Innenschwinge 5, 5a und die zumindest eine Außenschwinge 6, 6a sind durch ein erstes Verbindungselement 7 verbunden, welches um jeweils eine sich entlang einer Breitenrichtung Y erstreckende erste 8, beziehungsweise zweite Drehachse 9 relativ zu der zumindest einen Innenschwinge 5, 5a und relativ zu der zumindest einen Außenschwinge 6, 6a drehbar ist. Die zumindest eine Innenschwinge 5, 5a und die zumindest eine Außenschwinge 6, 6a sind um eine sich entlang einer Längsrichtung X erstreckende dritte Drehachse 10 relativ zu dem Fahrzeugsitzunterteil 3 schwenkbar angeordnet. Die zumindest zwei Dämpfungselemente 11, 12, 13, 14 sind zwischen dem ersten Verbindungselement 7 und dem Fahrzeugsitzunterteil 3 angeordnet.

Demnach erstreckt sich der Fahrzeugsitz 1 entlang der Höhenachse Z, der Breitenachse Y und der Längsachse X. Der Fahrzeugsitz umfasst weitere Elemente wie beispielsweise ein Sitzpolster 35 und eine Rückenlehne 36, welches auf dem Fahrzeugsitzoberteil 2 angeordnet werden können. Dies ist in den Figuren 2a und 2b angedeutet. In den übrigen Figuren wurde aufgrund der Übersichtlichkeit auf die Darstellung dieser Elemente verzichtet. Ferner sind auch noch weitere Ausführungsformen denkbar, welche weitere Elemente, wie beispielsweise Armlehnen umfassen. Das Fahrzeugsitzunterteil 3 kann an einer Fahrzeugkarosserie angeordnet werden.

Die zumindest eine Innenschwinge 5, 5a und die zumindest eine Außenschwinge 6, 6a kreuzen sich in einem Kreuzungsbereich K. Zumindest in einer Ruheposition sind dabei die erste Drehachse 8 und die zweite Drehachse 9 entlang der Höhenachse Z über dem Kreuzungsbereich K oder entlang der Höhenachse Z unter dem Kreuzungsbereich K angeordnet. Ferner weisen die erste Drehachse 8 und die zweite Drehachse 9 zumindest in einer Ruheposition den gleichen Abstand entlang der Höhenachse Z zu dem Fahrzeugsitzunterteil 3 auf. Demnach ist das Verbindungselement nicht verdreht und im Wesentlichen horizontal, beziehungsweise parallel zu der Längsachse X ausgerichtet. Es kann weiterhin eine Mittelachse M definiert werden, welche durch den Kreuzungspunkt K verläuft. Dies ist in den Figuren 2a und 2b gut ersichtlich. Die erste Drehachse 8 und die zweite Drehachse 9 weisen dabei zumindest in einer Ruheposition einen gleichen horizontalen Abstand zu der Mittelachse M auf. Das erste Verbindungselement 7 ist dabei mittels weiterer Verbindungselemente 42 an der zumindest einen Innenschwinge 5, beziehungsweise der zumindest einen Außenschwinge 6 angeordnet. Die weiteren Verbindungselemente 42 sind dazu geeignet, eine drehbare Verbindung zwischen dem ersten Verbindungselement 7 und der zumindest einen Innenschwinge 5, beziehungsweise der zumindest einen Außenschwinge 6 herzustellen. Die weiteren Verbindungselemente 42 erstrecken sich entlang der ersten Drehachse 8, beziehungsweise der zweiten Drehachse 9 und können dabei als Bolzen oder Schrauben ausgestaltet sein.. Hierzu sind entsprechende Mittellagerbohrungen 41 in der zumindest einen Innenschwinge 5, beziehungsweise der zumindest einen Außenschwinge 6 vorgesehen, in welchen diese Verbindungselemente 42 aufgenommen sind.

Die zumindest eine Innenschwinge 5, 5a und die zumindest eine Außenschwinge 6, 6a sind jeweils mittels zumindest einer unteren Loslagerung 20, 21 an dem Fahrzeugsitzunterteil 3 angeordnet. Weiterhin sind die zumindest eine Innenschwinge 5, 5a und die zumindest eine Außenschwinge 6, 6a jeweils mittels zumindest einer oberen Loslagerung 22, 23 an dem Fahrzeugsitzoberteil 2 angeordnet.

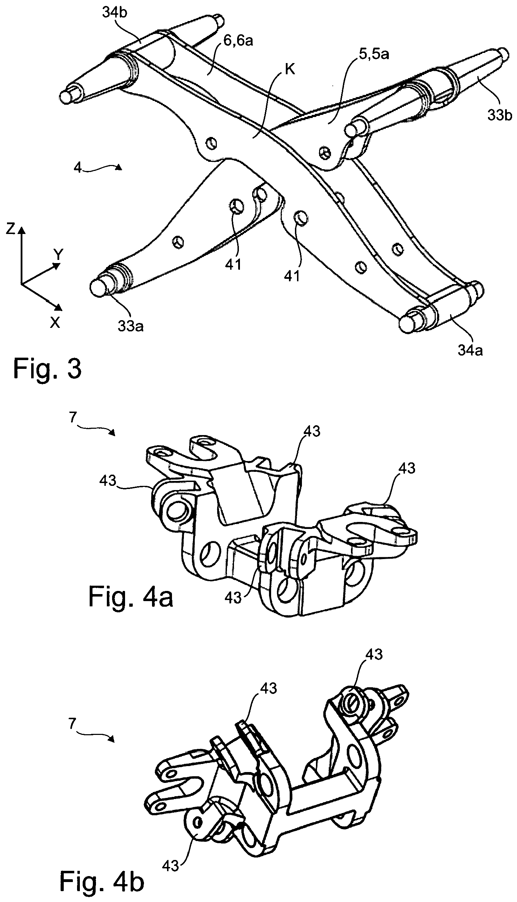

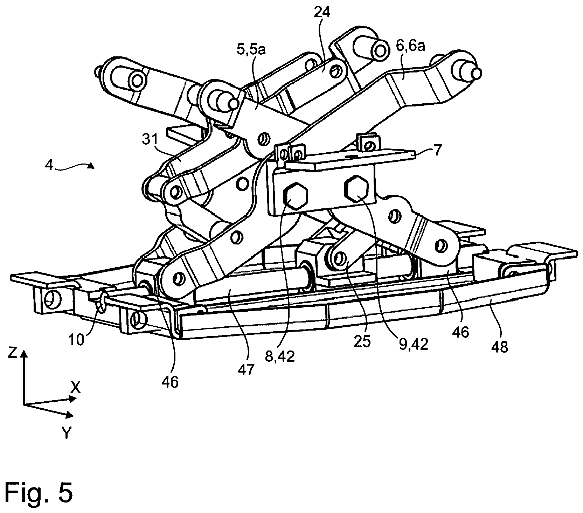

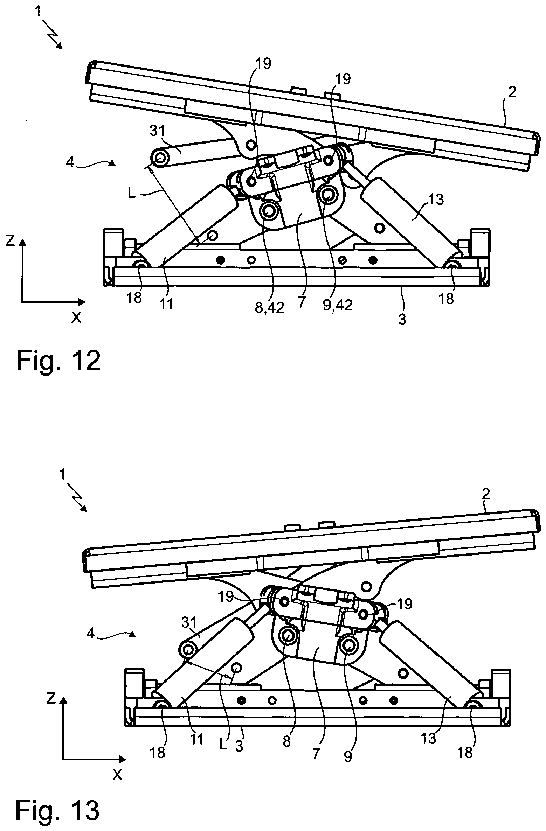

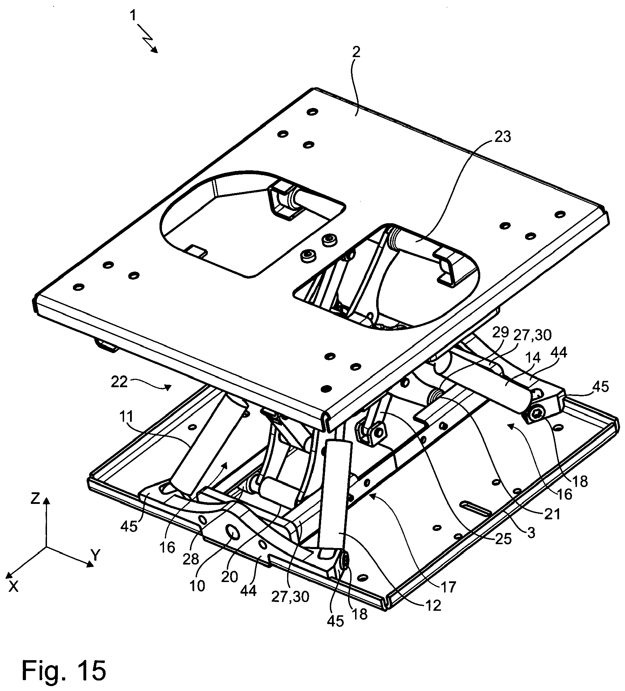

Die Scherengestellanordnung 4 umfasst ein Innenschwingenpaar 5a und ein Außenschwingenpaar 6a, wie beipielsweise in den Figuren 3 und 5 dargestellt. Gemäß der Ausführungsform nach Figur 3 weist sowohl das Innenschwingenpaar 5a als auch das Außenschwingenpaar 6a an den jeweiligen Schwingenenden einen durchgehenden Schwingenbolzen 33, 34 auf. An diesen Schwingenbolzen 33, 34 sind die jeweiligen Lagerrollen 28a, 28b, 29a, 29b angeordnet. Dies ist beispielsweise in Figur 15 gut ersichtlich. Das Innenschwingenpaar 5a weist demnach einen oberen Schwingenbolzen 33b auf, an welchem jeweils zwei Lagerrollen 29b angeordnet sind, welche der oberen Loslagerung 23 des Innenschwingenpaars 5a zugeordnet sind. Ferner weist das Innenschwingenpaar 5a einen unteren Schwingenbolzen 33a auf, an welchem jeweils zwei Lagerrollen 29a angeordnet sind, welche der unteren Loslagerung 21 des Innenschwingenpaars 5a zugeordnet sind. Ebenso weist das Außenschwingenpaar 6a einen oberen Schwingenbolzen 34b auf, an welchem jeweils zwei Lagerrollen 28b angeordnet sind, welche der oberen Loslagerung 22 des Außenschwingenpaars 6a zugeordnet sind. Ferner weist das Außenschwingenpaar 6a einen unteren Schwingenbolzen 34a auf, an welchem jeweils zwei Lagerrollen 28a angeordnet sind, welche der unteren Loslagerung 20 des Außenschwingenpaars 6a zugeordnet sind. Ferner kann das weitere Verbindungselement 42, mittels welchem eine drehbare Verbindung zwischen dem Verbindungselement 7 und der zumindest einen Innenschwinge 5, beziehungsweise der zumindest einen Außenschwinge 6 hergestellt wird, als ein durchgehender Bolzen, der sich entlang der jeweiligen Drehachse 8, 9 erstreckt ausgestaltet sein. Demnach wäre das erste Verbindungselement 7 mittels zweier Bolzen an der zumindest einen Innenschwinge 5, beziehungsweise der zumindest einen Außenschwinge 6 angeordnet. Ferner wäre es denkbar, dass pro Schwingenpaar jeweils zwei nicht durchgehende Bolzen, beziehungsweise Schrauben als weitere Verbindungselemente 42 vorgesehen sind. Demnach wäre das erste Verbindungselement 7 mittels insgesamt vier Bolzen an der zumindest einen Innenschwinge 5, beziehungsweise der zumindest einen Außenschwinge 6 angeordnet. Gemäß der Ausführungsform nach Figur 5 ist das weitere Verbindungselement 42 als ein Bolzen, beziehungsweise eine Schraube ausgeführt. Gemäß der Ausführungsform nach Figur 12 ist das weitere Verbindungselement 42 als ein durchgehender Bolzen oder Welle ausgestaltet.

Gemäß der Ausführungsform nach Figur 5 weisen die Schwingenpaare 5a, 6a an den Schwingenenden keinen durchgehenden Schwingenbolzen auf. Vielmehr ist an jedem Schwingenende eine Lagerungseinrichtung für die jeweiligen Lagerrollen 28a, 28b, 29a, 29b vorgesehen, welche anlog zu der in Figur 3 beschriebenen Ausführungsform den oberen Loslagerungen 22, 23, beziehungsweise den unteren Loslagerungen 20, 21 zugeordnet sind.

Die oberen Lagerrollen 28b, 29b sind jeweils in oberen Führungselementen 30b geführt. Die unteren Lagerrollen 28a, 29a sind jeweils in unteren Führungselementen 30a geführt. In der Figur 2a ist weiterhin ersichtlich, dass in einer Ruheposition die unteren Lagerrollen 28a, 29a einen geringeren Abstand zu der Mittelachse M aufweisen als die oberen Lagerrollen 28b, 29b.

Ferner sind die zumindest eine Innenschwinge 5, 5a oder die zumindest eine Außenschwinge 6, 6a mittels einer Festlagerung 24 mit dem Fahrzeugsitzunterteil 3 verbunden ist, wobei die zumindest eine Innenschwinge 5, 5a oder die zumindest eine Außenschwinge 6, 6a mittels einer weiteren Festlagerung 25 mit dem Fahrzeugsitzoberteil 2 verbunden ist.

Durch das Vorsehen der Festlagerungen 24, 25 wird eine unbestimmte Führung, verursacht durch das Vorsehen der vier Loslagerungen 20, 21, 22, 23, vermieden.

Die obere Festlagerung 24 umfasst dabei einen Hebelarm, welcher an einem entlang der Längsrichtung X hinteren Bereich und entlang der Höhenrichtung Z oberen Bereich der zumindest einen Außenschwinge 6, 6a drehbar angeordnet ist. Demnach ist dieser Hebelarm 37 an der zumindest einen Außenschwinge 6 zwischen dem oberen Schwingenbolzen 34b und dem Kreuzungspunkt K, beziehungsweise der um die erste Drehachse 8 drehbaren Verbindung des ersten Verbindungselements 7 mit der zumindest einen Außenschwinge 6, 6a drehbar angeordnet. Ferner ist der Hebelarm 37 drehbar an dem Fahrzeugsitzoberteil 2 angeordnet. Der Hebelarm ist dabei um eine vierte Drehachse 38 relativ zu dem Fahrzeugsitzoberteil 2 verschwenkbar. Vorteilhafterweise sind die vierte Drehachse 38 und die erste Drehachse 8 entlang der Höhenachse Z voneinander beabstandet. Ferner weisen die vierte Drehachse 38 und die erste Drehachse 8 zumindest in einer Ruheposition den gleichen Abstand zu der Mittelachse M auf.

Die untere Festlagerung 25 umfasst ebenso einen Hebelarm, welcher drehbar an einem entlang der Längsrichtung X hinteren Bereich und entlang der Höhenrichtung Z unteren Bereich der zumindest einen Innenschwinge 5, 5a drehbar angeordnet ist. Demnach ist dieser Hebelarm 39 an der zumindest einen Innenschwinge 5 zwischen dem unteren Schwingenbolzen 33a und dem Kreuzungspunkt K drehbar angeordnet. Ferner ist der Hebelarm 39 drehbar an dem Fahrzeugsitzunterteil 3 angeordnet. Der Hebelarm 39 ist dabei um eine fünfte Drehachse 40 relativ zu dem Fahrzeugsitzunterteil 3 verschwenkbar. Vorteilhafterweise sind die fünfte Drehachse 40 und die zweite Drehachse 9 entlang der Höhenachse Z voneinander beabstandet. Ferner weisen die fünfte Drehachse 40 und die zweite Drehachse 9 zumindest in einer Ruheposition den gleichen Abstand zu der Mittelachse M auf.

Durch eine derartige Ausgestaltung der Loslager 20,21, 22, 23 und der Festlager 23, 24 wird sichergestellt, dass durch eine Hubbewegung der Kreuzungspunkt, beziehungsweise das erste Verbindungselement 7 immer zentrisch bleiben.

Vorteilhafterweise sind zwischen dem Fahrzeugsitzunterteil 3 und dem Verbindungselement 7 vier Dämpfungselemente 11, 12, 13, 14 angeordnet. Dabei bilden in einer Ruheposition des Fahrzeugsitzes 1 jeweils zwei Dämpfungselemente 11, 12, 13, 14 die Schenkel eines fiktiven Trapezes 16 aus. Die Anordnung der vier Dämpfungselemente 11, 12, 13, 14 kann auch dahingehend angesehen werden, dass diese zusammen mit einem Abschnitt des Fahrzeugunterteils 3 und dem ersten Verbindungselement 7 einen fiktiven Pyramidenstumpf 17 bilden.

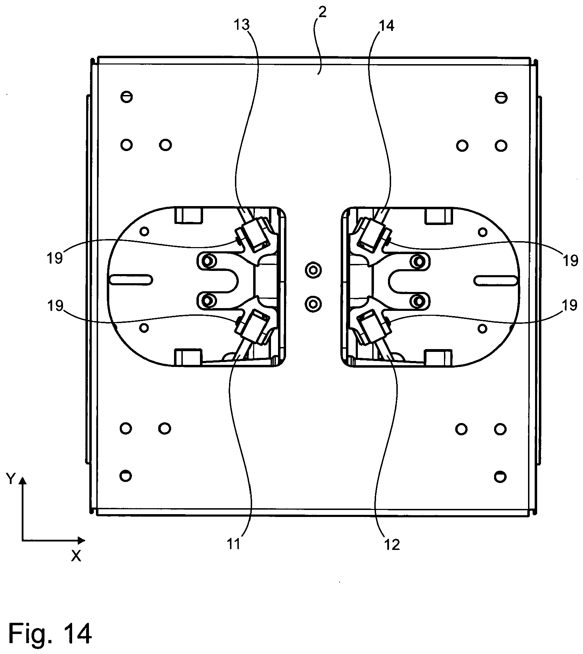

Die Dämpfungselemente 11, 12, 13, 14 sind um eine jeweilige Schwenkachse 18 schwenkbar an dem Fahrzeugsitzunterteil 3 angeordnet. Ferner sind die Dämpfungselemente 11, 12, 13, 14 um eine jeweilige weitere Schwenkachse 19 schwenkbar an dem ersten Verbindungselement 7 angeordnet. Dies ist beispielsweise in Figur 14 erkennbar. Das erste Verbindungselement 7 weist hierzu entsprechende Aufnahmen 43 auf, an welchen die Dämpfungselemente 11, 12, 13, 14 schwenkbar anordenbar sind. Dies ist in den Figuren 4a und 4b gut ersichtlich. Ebenso sind an dem Fahrzeugsitzunterteil entsprechene Aufnahmen 45 vorgesehen, an welchen die Dämpfungselemente 11, 12, 13, 14 schwenkbar anordenbar sind.

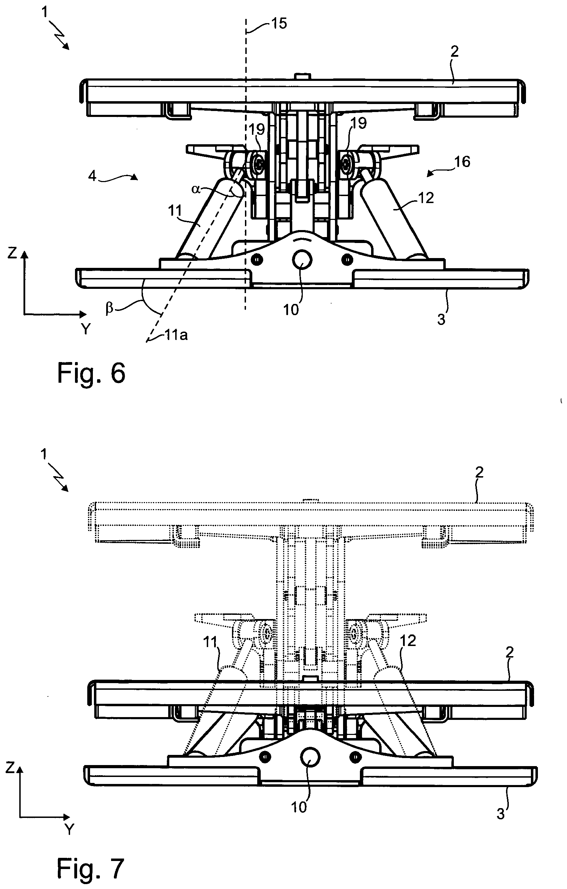

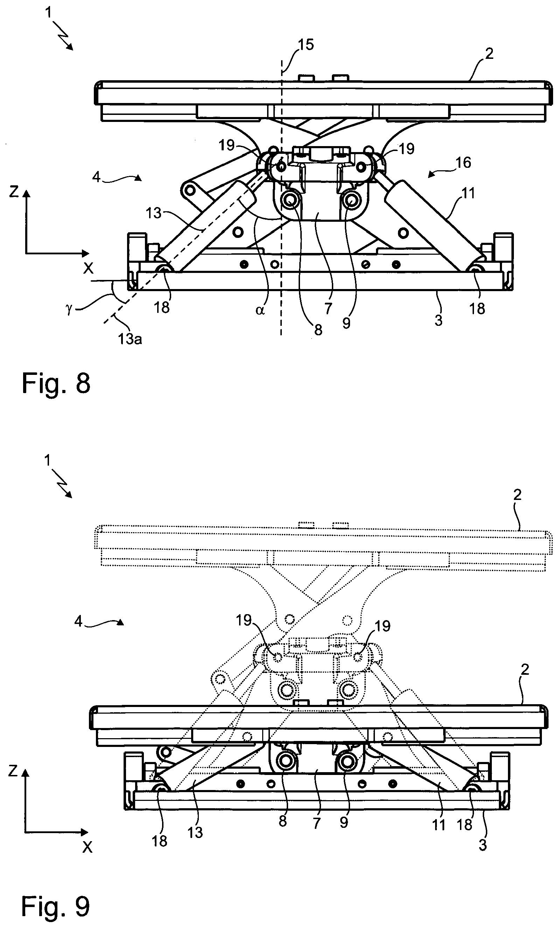

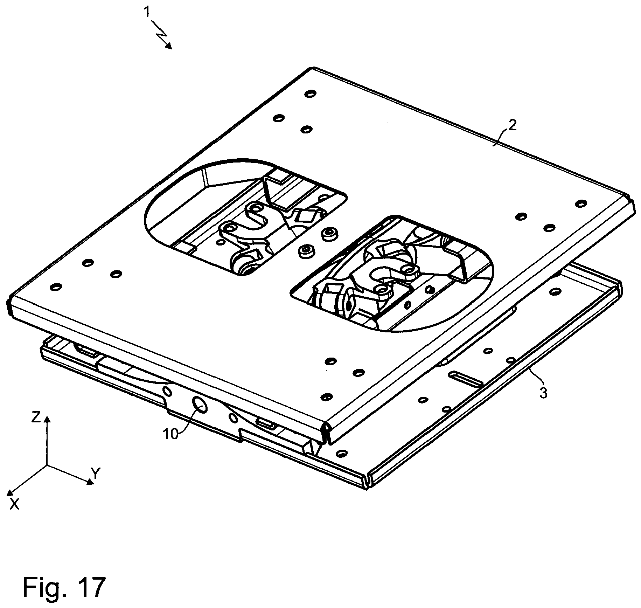

Bei einer Vertikalbewegung des Fahrzeugsitzoberteils 2 relativ zu dem Fahrzeugsitzunterteil 3 wird das erste Verbindungselement 7 entlang der Höhenachse Z verlagert, dementsprechend werden alle vier Dämpfungselemente 11, 12, 13, 14 in ihrer Länge modifiziert. Ferner wird bei einer derartigen vertikalen Bewegung des Fahrzeugsitzoberteils 2 durch die schwenkbare Anordnung der Dämpfungselemente 11, 12, 13, 14 der Anstellwinkel α der Dämpfungselemente 11, 12, 13, 14 entsprechend modifiziert. Dabei erstreckt sich der Anstellwinkel α zwischen einer Mittelachse 11a, 12a, 13a, 14a des jeweiligen Dämpfungselements 11, 12, 13, 14 und der ersten Achse 15. Dementsprechend wird die vertikalen Bewegung des Fahrzeugsitzoberteils 2 durch die Dämpfungselemente 11, 12, 13, 14 gedämpft. Dies ist in den Figuren 6 bis 9 gut ersichtlich. In den Figuren 6 und 8 ist dabei ein Zustand dargestellt, in welcher sich der Fahrzeugsitz in einer mittleren vertikalen Position befindet. Ferner ist in den Figuren 7 und 9 ein Fahrzeugsitz dargestellt, welcher sich in eine oberen (gestrichelte Darstellung), beziehungsweise einer unteren vertikalen Position befindet. Ebenso wird in Figur 17 der Fahrzeugsitz 1 in der unteren vertikalen Position gezeigt.

In den Figuren 2b, 10 bis 13 und 16 ist ein Fahrzeugsitz 1 dargestellt, bei welchem das Fahrzeugsitzoberteil 2 eine Nickbewegung relativ zu dem Fahrzeugsitzunterteil 3 erfahren hat. Bei einer solchen Nickbewegung ist das Fahrzeugsitzoberteil 2 um eine Nickachse 26 relativ zu dem Fahrzeugsitzunterteil 3 verkippt. Dabei erfolgt eine Verlagerung der in den oberen Loslagern 22, 23 gelagerten Schwingenenden auf entlang der Höhenachse Z unterschiedliche horizontale Ebenen. Darüber hinaus erfolgt eine Drehung des ersten Verbindungselements 7 um die erste Drehachse 8 und die zweite Drehachse 9. Durch diese Drehung des Verbindungselements werden, entsprechend der Drehrichtung die Dämpfungselement 11, 12, 13, 14 verlängert oder verkürzt. Die Nickbewegung wird somit gedämpft. Wie aus den Figuren 12 und 13 ersichtlich, ist es von Vorteil, dass das Verbindungselement gegensätzlich zu dem Fahrzeugsitzoberteil 2 verkippt, beziehungsweise gedreht wird. Analog hierzu kann eine Nickbewegung auch dahingehend erfolgen, dass Fahrzeugsitzoberteil 2 seine horizontale Position behält und das Fahrzeugsitzunterteil 3 entsprechend verkippt. Dementsprechend erfolgt die Verlagerung der Achsen der unteren Loslager 20, 21 in entsprechend andere horizontale Ebenen. Analog erfolgt auch hier eine Drehung des ersten Verbindungselements 7 um die erste Drehachse 8 und die zweite Drehachse 9. Durch diese Drehung des Verbindungselements werden, entsprechend der Drehrichtung die Dämpfungselemente 11, 12, 13, 14 verlängert oder verkürzt. Die Nickbewegung wird somit gedämpft.

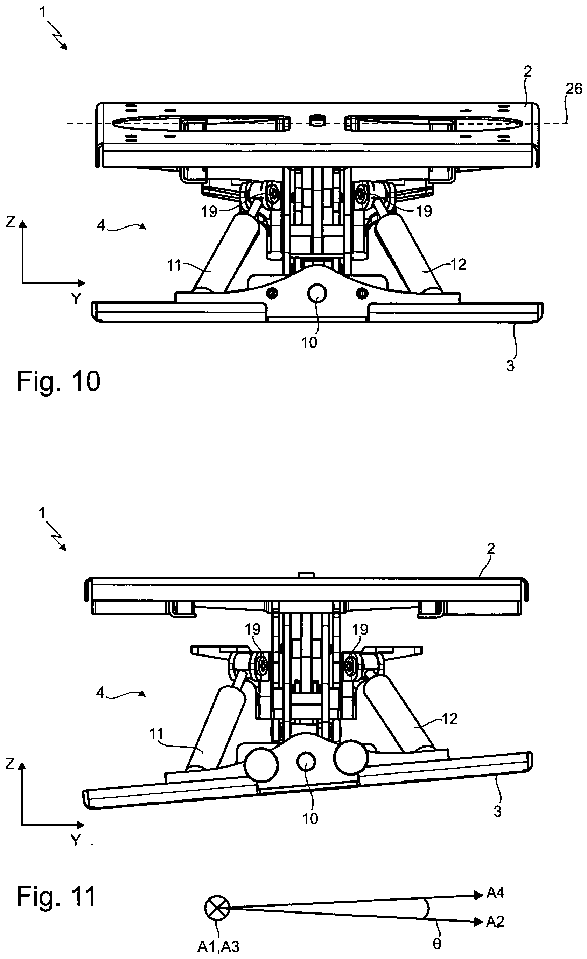

Neben der Dämpfung der vertikalen Bewegung des Fahrzeugsitzoberteils 2 und der Nickbewegung kann auch eine Wankbewegung mittels der Dämpfungselemente 11, 12, 13, 14 gedämpft werden. Hierzu sind die zumindest eine Innenschwinge 5, 5a, die zumindest eine Außenschwinge 6, 6a und das Fahrzeugsitzoberteil um die sich entlang einer Längsrichtung X erstreckende dritte Drehachse 10 relativ zu dem Fahrzeugsitzunterteil 3 verschwenkbar. In Figur 11 ist eine solche Wankbewegung dargestellt. Durch die Verschwenkung um die dritte Drehachse 10 ändert sich die Ausrichtung das Fahrzeugsitzoberteils 2 relativ zu dem Fahrzeugsitzunterteil 3. Das Fahrzeugsitzoberteil 2 und Fahrzeugsitzunterteil 3 erstrecken sich in einer Ausgangsposition jeweils in einer Ebene. Die Ebene, in welcher sich das Fahrzeugsitzoberteil 2 erstreckt kann durch die Vektoren A1 und A2 beschrieben werden. Die Ebene, in welcher sich das Fahrzeugsitzunterteil 3 erstreckt, kann durch die Vektoren A3 und A4 beschrieben werden. In einer Ausgangsposition, in welcher das Fahrzeugsitzoberteil 2 und das Fahrzeugsitzunterteil 3 parallel zu einander angeordnet sind, wären die Vektoren A2 und A4 parallel zu der Breitenachse Y und die Vektoren A1 und A3 parallel zu der Längsachse X. Bei einer Wankbewegung weisen die Vektoren A2 und A4 einen Winkel θ ≠ 0°, 180° auf. Dies ist beispielsweise in Figur 11 dargestellt, wobei die Vektoren A1 und A3 in die Zeichenebene gerichtet sind. Bei einer Wankbewegung ändert sich demnach ein Abstand zwischen einer Schwenkachse 19 bezüglich einer oberen Anbindung eines Dämpferelements 11, 12, 13, 14 an dem ersten Verbindungselement 7 und einer Schwenkachse 18 bezüglich einer unteren Anbindung eines Dämpferelements 11, 12, 13, 14 an dem Fahrzeugsitzunterteil 3. Demnach werden die Dämpferelemente 11, 12, 13, 14 entsprechend verkürzt oder verlängert, wodurch die Wankbewegung gedämpft wird.

Die unteren Loslagerungen 20, 21 der zumindest einen Innenschwinge 5, 5a und der zumindest einen Außenschwinge 6, 6a umfassen zumindest ein Aufnahmeelement 27, welches um die dritte Drehachse (10) relativ zu dem Fahrzeugsitzunterteil (3) schwenkbar ist. In Figur 15 ist eine Ausführungsform gezeigt, in welcher das Aufnahmeelement 27 und Führungselement 30a ausgebildet ist in welchen die unteren Lagerrollen 28a, 29a geführt werden. Das Führungselement ist als ein im Wesentlichen plattenartiges Element ausgebildet, welches sich entlang der Längserstreckung des Fahrzeugsitzunterteils 3 erstreckt und im Wesentlichen mittig an diesem angeordnet ist. Das Fahrzeugsitzunterteil 3 weist dabei an seinen beiden Längsseiten jeweils ein Befestigungselement 44 auf. An diesem Befestigungselement 44 ist das Führungselement 30a mittels einer jeweiligen Drehlagerung drehbar um die dritte Drehachse 10 gelagert. An dem Befestigungselement 44 sind weiterhin seitlich die Aufnahmen 45 angeordnet oder in diesem integriert, an welchen die Dämpfungselemente 11, 12, 13, 14 schwenkbar angeordnet sind. Die untere Festlagerung 24 ist ebenso an dem plattenartigen Element angeordnet.

Nach der Ausführungsform gemäß Figur 5 sind keine unteren Lagerungsrollen 28a, 29a vorgesehen. Die zumindest eine Innenschwinge 5, 5a und die zumindest eine Außenschwinge 6, 6a sind jeweils mit einem Gleitelement 46 verbunden, welches auf einer durchgehenden Gleitschiene 47 entlang der Längsrichtung X gleiten kann. Die Gleitschiene 47 ist mit dem Halterungselement 48 verbunden und erstreckt sich entlang der dritten Drehachse 10. Bei einer Wankbewegung können die Gleitelemente 46 um die dritte Drehachse 10, beziehungsweise die feste Gleitschiene 47 gedreht werden. In einer weiteren Ausführungsform (hier nicht gezeigt) ist die Gleitschiene als drehmomentübertragende 4-Kantwelle ausgeführt. Diese 4-Kantwelle ist dann an dem Halterungselement 48, beziehungsweise dessen Aufnahmen drehbar gelagert. Bei dieser Ausführungsform trifft dann zu, dass die Gleitelemente 46 auf der Gleitschiene 47 die x- Bewegung ausführen und die Wankbewegung durch Verdrehung der Gleitschiene 47 realisiert wird.

Ferner kann diese Gleitschiene 47 relativ zu einem Halterungselement 48, welches an dem Fahrzeugsitzunterteil 3 befestigbar ist, um die dritte Drehasche 10 verschwenkt werden. Das untere Festlager 24 ist ebenso mit der Gleitschiene 47 verbunden.

In Figur 6 ist die Frontansicht des Fahrzeugsitzes 1 dargestellt. Ferner ist ein projizierter Anstellwinkel β dargestellt. Der projizierte Anstellwinkel β in die Ebene der Vorderansicht bestimmt hauptsächlich die Aufteilung der Dämpferkräfte in die Komponenten um eine Wankachse, beziehungsweise um die dritte Drehachse 10 und in vertikaler Richtung. In Figur 8 ist eine Seitenansicht des Fahrzeugsitzes 1 dargestellt. Ferner ist ein projizierter Anstellwinkel γ dargestellt. Der projizierte Anstellwinkel γ in die Ebene der Seitenansicht bestimmt hauptsächlich die Aufteilung der Dämpferkräfte in die Komponenten um die Nickachse und in vertikaler Richtung. Demnach ist ersichtlich, dass die Dämpferkräfte der Dämpfungselemente 11, 12, 13, 14 sich abhängig vom Anstellwinkel α in die jeweiligen Komponenten bezüglich einer Wankbewegung, einer Nickbewegung und einer vertikalen Bewegung aufteilen.

An der zumindest einen Innenschwinge 5, 5a oder der zumindest einen Außenschwinge 6, 6a kann weiterhin ein Hebelarm 31 vorgesehen sein, welcher mit der zumindest einen Außenschwinge 6, 6a oder der zumindest einen Innenschwinge 5, 5a über ein zweites Verbindungselement 32 verbunden ist. Das Verbindungselement 32 weist dabei eine Länge L auf. In den Figuren 12 und 13 ist diese Länge L dargestellt. Das zweite Verbindungselement 32 ist jedoch nicht gezeigt. Wie aus diesen Figuren ersichtlich, ändert sich die Länge L mit der entsprechenden Verkippung des Fahrzeugsitzoberteils 2. Ein in seiner Länge nicht veränderliches zweites Verbindungselement 32 würde demnach eine Nickbewegung des Fahrzeugsitzoberteils 2 unterbinden. Ein zweites Verbindungselement 32, welches in seiner Länge modifizierbar ist, beziehungsweise dessen Länge L mittels eines Aktuators einstellbar ist, könnten somit für eine Einstellung der Neigung des Fahrzeugsitzoberteils 2, beziehungsweise der Verkippung des Fahrzeugsitzoberteils (2) um eine Nickachse (26) genutzt werden.

Um eine entsprechende Rückstellung der Nickbewegung, der Wankbewegung und der vertikalen Bewegung zu ermöglichen, können parallel zu den Dämpfungselementen 11, 12, 13, 14 Federelemente 49 zwischen dem ersten Verbindungselement 7 und dem Fahrzeugsitzunterteil 3 angeordnet sein. Die Anordnung und die Funktion der Federelemente 49 kann analog zu den Dämpferelementen 11, 12, 13, 14 beschrieben werden mit dem Unterschied, dass anstelle der dissipativen Funktion eine Rückstellung bewirkt wird. Die Federelemente 49, können ebenso geneigt zu der ersten Achse 15 angeordnet sein, dargestellt. In Figur 1 sind solche geneigt angeordneten Federelemente 49 dargestellt.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Fahrzeugsitz
- 2: Fahrzeugsitzoberteil
- 3: Fahrzeugsitzunterteil
- 4: Scherengestellanordnung
- 5: zumindest eine Innenschwinge
- 5a: Innenschwingenpaar
- 6: zumindest eine Außenschwinge
- 6a: Außenschwingenpaar
- 7: Verbindungselement
- 8: erste Drehachse
- 9: zweite Drehachse
- 10: dritte Drehachse
- 11: Dämpfungselement
- 11a: Mittelachse des Dämpfungselements
- 12: Dämpfungselement
- 12a: Mittelachse des Dämpfungselements
- 13: Dämpfungselement
- 13a: Mittelachse des Dämpfungselements
- 14: Dämpfungselement
- 14a: Mittelachse des Dämpfungselements
- 15: erste Achse
- 16: fiktives Trapez
- 17: fiktiver Pyramidenstumpf
- 18: Schwenkachse
- 19: Schwenkachse
- 20: untere Loslagerung des Außenschwingenpaars
- 21: untere Loslagerung des Innenschwingenpaars
- 22: obere Loslagerung des Außenschwingenpaars
- 23: obere Loslagerung des Innenschwingenpaars
- 24: obere Festlagerung
- 25: untere Festlagerung
- 26: Nickachse
- 27: Aufnahmeelement
- 28a: untere Lagerrollen
- 28b: obere Lagerrollen
- 29a: untere Lagerrollen
- 29b: obere Lagerrollen
- 30a: unteres Führungselement
- 30b: oberes Führungselement
- 31: Hebelarm
- 32: zweites Verbindungselement
- 33a: unterer Schwingenbolzen
- 33b: oberer Schwingenbolzen
- 34a: oberer Schwingenbolzen
- 34b: unterer Schwingenbolzen
- 35: Sitzpolster
- 36: Rückenlehne
- 37: Hebelarm
- 38: vierte Drehachse
- 39: Hebelarm
- 40: fünfte Drehachse
- 41: Mittellagerbohrungen
- 42: weiteres Verbindungselement
- 43: Aufnahmen des Verbindungselements
- 44: Befestigungselement
- 45: Aufnahmen
- 46: Gleitelement
- 47: Gleitschiene
- 48: Halterungselement
- 49: Federelement
- A1: Vektor
- A2: Vektor
- A3: Vektor
- A4: Vektor
- K: Kreuzungsbereich
- L: Länge
- M: Mittelachse
- Z: Höhenachse
- X: Längsachse
- Y: Breitenachse
- α: Anstellwinkel
- β: Winkel
- γ: Winkel

## Patentansprüche

1. Fahrzeugsitz (1) umfassend ein Fahrzeugsitzoberteil (2) und ein Fahrzeugsitzunterteil (3), welche entlang einer Höhenachse (Z) voneinander beabstandet sind und mittels einer Scherengestellanordnung (4) miteinander verbunden sind, wobei die Scherengestellanordnung (4) zumindest eine Innenschwinge (5, 5a) und zumindest eine Außenschwinge (6, 6a) umfasst,
**dadurch gekennzeichnet, dass**
zumindest zwei Dämpfungselemente (11, 12, 13, 14) zwischen dem Fahrzeugsitzoberteil (2) und dem Fahrzeugsitzunterteil (3) vorgesehen sind, wobei die zumindest zwei Dämpfungselemente (11, 12, 13, 14) sich jeweils bezüglich einer zur Höhenachse (Z) parallelen ersten Achse (15) in einem Anstellwinkel α geneigt erstrecken.

2. Fahrzeugsitz(1) nach Anspruch 1,
**dadurch gekennzeichnet, dass**
die zumindest eine Innenschwinge (5, 5a) und die zumindest eine Außenschwinge (6, 6a) um eine sich entlang einer Längsrichtung (X) erstreckende dritte Drehachse (10) relativ zu dem Fahrzeugsitzunterteil (3) schwenkbar angeordnet sind.

3. Fahrzeugsitz(1) nach Anspruch 1 oder 2,
**dadurch gekennzeichnet, dass**
die zumindest eine Innenschwinge (5, 5a) und die zumindest eine Außenschwinge (6, 6a) durch ein Verbindungselement (7) verbunden sind, welches um jeweils eine sich entlang einer Breitenrichtung (Y) erstreckende Drehachse (8, 9) relativ zu der zumindest einen Innenschwinge (5, 5a) und relativ zu der zumindest einen Außenschwinge (6, 6a) drehbar ist, wobei die zumindest zwei Dämpfungselemente (11, 12, 13, 14) zwischen dem Verbindungselement (7) und dem Fahrzeugsitzunterteil (3) angeordnet sind.

4. Fahrzeugsitz(1) nach einem der vorhergehenden Ansprüche ,
**dadurch gekennzeichnet, dass**
vier Dämpfungselemente (11, 12, 13, 14) vorgesehen sind, wobei zwischen dem Fahrzeugsitzunterteil (3) und dem Verbindungselement (7) vier Dämpfungselemente (11, 12, 13, 14) angeordnet sind, wobei in einer Ruheposition des Fahrzeugsitzes (1) jeweils zwei Dämpfungselemente (11, 12, 13, 14) die Schenkel eines fiktiven Trapezes (16) ausbilden.

5. Fahrzeugsitz (1) nach einem der Ansprüche 3 bis 4,
**dadurch gekennzeichnet, dass**
die Dämpfungselemente (11, 12, 13, 14) um eine jeweilige Schwenkachse (18) schwenkbar an dem Fahrzeugsitzunterteil (3) angeordnet sind, wobei die Dämpfungselemente (11, 12, 13, 14) um eine jeweilige weitere Schwenkachse (19) schwenkbar an dem Verbindungselement (7) angeordnet sind.

6. Fahrzeugsitz (1) nach einem der vorhergehenden Ansprüche,
**dadurch gekennzeichnet, dass**
die zumindest eine Innenschwinge (5, 5a) und die zumindest eine Außenschwinge (6, 6a) sich in einem Kreuzungsbereich (K) kreuzen, wobei zumindest in einer Ruheposition die erste Drehachse (8) und die zweite Drehachse (9) entlang der Höhenachse (Z) über dem Kreuzungsbereich (K) oder entlang der Höhenachse (Z) unter dem Kreuzungsbereich (K) angeordnet sind, wobei zumindest in einer Ruheposition die erste Drehachse (8) und die zweite Drehachse (9) den gleichen Abstand entlang der Höhenachse (Z) zu dem Fahrzeugsitzunterteil (3) aufweisen.

7. Fahrzeugsitz (1) nach einem der vorhergehenden Ansprüche,
**dadurch gekennzeichnet, dass**
die zumindest eine Innenschwinge (5, 5a) und die zumindest eine Außenschwinge (6, 6a) jeweils mittels zumindest einer unteren Loslagerung (20, 21) an dem Fahrzeugsitzunterteil (3) angeordnet sind, wobei die zumindest eine Innenschwinge (5, 5a) und die zumindest eine Außenschwinge (6, 6a) jeweils mittels zumindest einer oberen Loslagerung (22, 23) an dem Fahrzeugsitzoberteil (2) angeordnet sind, wobei die zumindest eine Innenschwinge (5, 5a) oder die zumindest eine Außenschwinge (6, 6a) mittels einer Festlagerung (24) mit dem Fahrzeugsitzunterteil (3) verbunden ist, wobei die zumindest eine Innenschwinge (5, 5a) oder die zumindest eine Außenschwinge (6, 6a) mittels einer weiteren Festlagerung (25) mit dem Fahrzeugsitzoberteil (2) verbunden ist.

8. Fahrzeugsitz (1) nach einem der vorhergehenden Ansprüche,
**dadurch gekennzeichnet, dass**
bei einer Vertikalbewegung des Fahrzeugsitzoberteils (2) relativ zu dem Fahrzeugsitzunterteil (3) das Verbindungselement (7) entlang der Höhenachse (Z) verlagert ist, wobei der Anstellwinkel α der Dämpfungselemente (11, 12, 13, 14) abhängig ist von einer vertikalen Position des Fahrzeugsitzoberteils (2) relativ zu dem Fahrzeugsitzunterteil (3), wobei der Anstellwinkel α sich zwischen einer Mittelachse (11a, 12a, 13a, 14a) des jeweiligen Dämpfungselements (11, 12, 13, 14) und der ersten Achse (15) erstreckt und aus einem Bereich zwischen 10° und 80° gewählt ist.

9. Fahrzeugsitz (1) nach einem der vorhergehenden Ansprüche,
**dadurch gekennzeichnet, dass**
bei einer Nickbewegung das Fahrzeugsitzoberteil (2) um eine Nickachse (26) relativ zu dem Fahrzeugsitzunterteil (3) verkippt ist, wobei bei dieser Nickbewegung das Verbindungselement (7) um die erste Drehachse (8) und um die zweite Drehachse (9) gedreht wird, wobei bei einer Wankbewegung die zumindest eine Innenschwinge (5, 5a), die zumindest eine Außenschwinge (6, 6a) und das Fahrzeugsitzoberteil (2) um die dritte Drehachse (10) relativ zu dem Fahrzeugsitzunterteil (3) verschwenkt sind.

10. Fahrzeugsitz (1) nach Anspruch 9,
**dadurch gekennzeichnet, dass**
die Dämpfungselemente (11, 12, 13, 14) die Vertikalbewegung des Fahrzeugsitzoberteils (2) relativ zu dem Fahrzeugsitzunterteil (3), die Nickbewegung des Fahrzeugsitzoberteils (2) um die Nickachse (26) relativ zu dem Fahrzeugsitzunterteil (3) und die Wankbewegung des Fahrzeugsitzoberteils (2) um die dritte Drehachse (10) relativ zu dem Fahrzeugsitzunterteils (3) dämpfen.

11. Fahrzeugsitz (1) nach einem der Ansprüche 7 bis 10,
**dadurch gekennzeichnet, dass**
die unteren Loslagerungen (21, 21) der zumindest einen Innenschwinge (5, 5a) und der zumindest einen Außenschwinge (6, 6a) zumindest ein Aufnahmeelement (27) umfassen, wobei das zumindest eine Aufnahmeelement (27) um die dritte Drehachse (10) relativ zu dem Fahrzeugsitzunterteil (3) schwenkbar ist, wobei die unteren Loslagerungen (20, 21) Lagerrollen (28, 29) umfassen, wobei das zumindest eine Aufnahmeelement (27) als ein Führungselement (30a) ausgebildet ist, in welchem Lagerrollen entlang der Längsrichtung X geführt sind.

12. Fahrzeugsitz (1) nach einem der vorhergehenden Ansprüche,
**dadurch gekennzeichnet, dass**
an der zumindest einen Innenschwinge (5, 5a) oder der zumindest einen Außenschwinge (6, 6a) ein Hebelarm (31) vorgesehen ist, wobei der Hebelarm (31) mit der zumindest einen Außenschwinge (6, 6a) oder der zumindest einen Innenschwinge (5, 5a) über ein zweites Verbindungselement (32) verbindbar ist, wobei das zweite Verbindungselement (32) in seiner Länge L modifizierbar ist, wobei die Verkippung des Fahrzeugsitzoberteils (2) um eine Nickachse (26) relativ zu dem Fahrzeugsitzunterteil (3) durch die Länge L des zweiten Verbindungselements (32) festlegbar ist.
